# EUROPÄISCHE PATENTSCHRIFT

(11) **EP 0 771 276 B1**
(45) Veröffentlichungstag und Bekanntmachung des Hinweises auf die Patenterteilung: **04.07.2001**
(21) Anmeldenummer: 96915017.6
(22) Anmeldetag: 04.05.1996
(51) Int. Cl.: B60H 1/00

(54) **KLIMAGERÄT, INSBESONDERE FÜR EIN KRAFTFAHRZEUG, MIT LUFTSEITIGER AUSBLASTEMPERATURREGELUNG**
AIR-CONDITIONING DEVICE INTENDED IN PARTICULAR FOR USE IN A MOTOR VEHICLE, WITH ATMOSPHERE-SIDE OUTLET TEMPERATURE REGULATION
CONDITIONNEUR D'AIR, EN PARTICULIER POUR VEHICULE AUTOMOBILE, A REGLAGE DE LA TEMPERATURE DE L'AIR INSUFFLE

(30) Priorität: 16.05.1995 DE 29508065 U
(43) Veröffentlichungstag der Anmeldung: 07.05.1997
(73) Patentinhaber: Valeo Klimasysteme GmbH, 96473 Rodach (DE)
(72) Erfinder: HARTLEB, Thomas, D-96484 Meeder (DE); HILDEBRAND, Reinhard, D-96257 Redwitz (DE)
(74) Vertreter: COHAUSZ HANNIG DAWIDOWICZ & PARTNER
(86) Internationale Anmeldenummer: EP9601864
(87) Internationale Veröffentlichungsnummer: WO9636504

(56) Entgegenhaltungen:
- EP-A- 0 419 707
- EP-A- 0 546 429
- US-A- 4 848 444
- US-A- 5 392 845

## Beschreibung

Die Erfindung bezieht sich auf ein Klimagerät, insbesondere für ein Kraftfahrzeug, mit luftseitiger Ausblastemperaturregelung gemäß Patentanspruch 1.

Durch die EP-B1-0 419 707 ist ein gattungsbilden des Heiz- bzw. Klimagerät, insbesondere für ein Kraftfahrzeug, mit luftseitiger Temperatureinstellung bekannt, bei der die Mischluftklappe über eine Steuervorrichtung in Verstellabhängigkeit von einem vorgebbaren Temperatur-Sollwert und einem die jeweilige Ausblastemperatur erfassenden Sensor im Mischraum hinter der Mischluftklappe bzw. im oder unmittelbar hinter dem Wärmetauscher gestellt ist.

Eine demgegenüber schneller reagierende Ausblastemperaturregelung auch bei sehr kompaktem Mischraum kann erfindungsgemäß durch die Lehre des Anspruchs 1 erreicht werden; vorteilhafte Ausgestaltungen der Erfindung sind jeweils Gegenstand der Unteransprüche.

Aufgrund von in bekannter Weise eingestelltem Sollwert und der von den beiden vorgenannten Sensoren gelieferten Istwerte kann in einer an sich bekannten Steuer- bzw. Regelvorrichtung für die Mischluftklappen die resultierende Mischtemperatur ermittelt und eingestellt werden; in vorteilhafter Weise sind eine mischluftklappenseitige Wichtung der Temperatur-Sensoren im Sinne eines maximalen Einflusses des Temperatur-Sensors im bzw. unmittelbar hinter dem Verdampfer bei maximaler Kaltluftzufuhr und eines maximalen Einflusses des Temperatur-Sensors im bzw. unmittelbar hinter dem Wärmetauscher bei maximaler Warmluftzufuhr und Mischwichtungen bei entsprechenden Zwischenstellungen der Mischluftklappen vorgesehen. Auf einen gesonderten Ausblastemperatur-Sensor wird dabei zweckmäßigerweise verzichtet, so daß der Mischraum vorteilhaft kleinbauend ausführbar ist.

Über abgelegte unterschiedliche Regelkurven für die verschiedenen Luftverteilungspositionen kann für verschiedene Luftverteilungspositionen über unterschiedliche Luftverteilerklappen zu unterschiedlichen innenraumseitigen Luftaustrittskanälen die Ausblastemperatur für jeden Auslaß bestimmt und insbesondere mit elektrischen Verstellmitteln eingestellt werden.

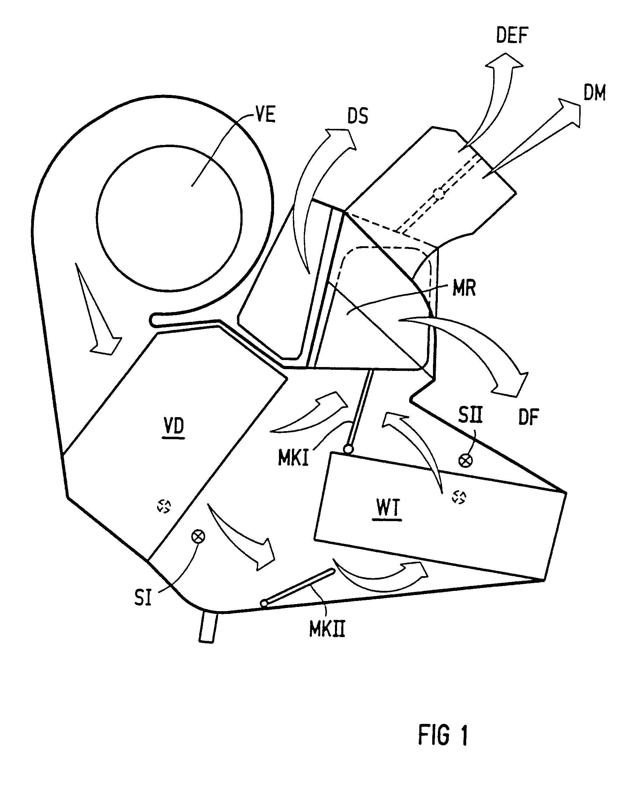

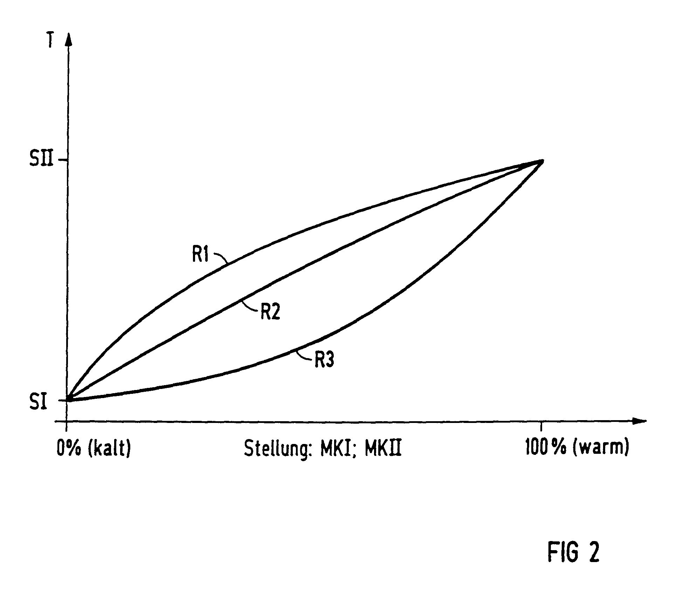

Die Erfindung wird im folgenden anhand eines in axialem Schnitt schematisch dargestellten Klimagerätes gemäß FIG 1 und beispielhafter Regelkurven gemäß FIG 2 über den unterschiedlichen Einfluß der Temperatur-Sensoren je nach Stellung der Mischluftklappe naher erläutert.

In einem Kunststoffgehäuse wird von einem eingangsseitigen Ventilator VE Frisch- bzw. Umluft einem dem Ventilator VE nachgeschalteten Verdampfer VD zugeführt; der aus dem Verdampfer VD ausströmende Kaltluftstrom gelangt je nach Stellung einer ersten Mischluftklappe MKI bzw. einer zweiten, vorzugsweise mit der ersten Mischluftklappe MKI mechanisch gekoppelten, Mischluftklappe MKII als direkter Kaltluftstrom oder als durch den Wärmetauscher WT erwärmter Warmluftstrom in bestimmtem Mischungsverhältnis in einen Mischraum MR und von dort je nach eingestellter Luftverteilung mit möglicher Zwischenstellung z. B. zu Fußraum-Düsen DF, zu Defrost-Düsen DEF, zu Mittel-Düsen DM bzw. Seiten-Düsen DS.

Erfindungsgemäß ist als Istwertgeber für die Steuervorrichtung der Ausblastemperaturregelung durch Verstellung der Mischluftklappen MK bzw.MKII sowohl ein Temperatur-Sensor SI im bzw. unmittelbar hinter dem Verdampfer VD als auch ein Temperatur-Sensor SII im bzw. unmittelbar hinter dem Wärmetauscher WT angeordnet. Aus diesen beiden Signalen wird unter Berücksichtigung eines vorgegebenen Temperatur-Sollwertes und gegebenenfalls in Abhängigkeit von der jeweils augenblicklichen Mischluftklappen-Stellung entsprechend der Wichtung gemäß Anspruch 2 aufgrund in der Steuer- bzw. Regelvorrichtung abgelegter Regelkurven gemäß Anspruch 3 bzw. 4 das jeweilige Ausblastemperatursignal ermittelt und das Mischungsverhältnis von Warmluft und Kaltluft durch entsprechendes Verstellen der Mischluftklappe MKI bzw.MKII eingestellt.

FIG 2 zeigt dazu drei individuelle durch Verstellung der Mischluftklappen einstellbare Temperatur-Regelkurven für unterschiedliche Luftverteilungseinstellungen, beispielsweise R1 für Defrost; R2 für Fußraum sowie R3 für Mittelebene jeweils in Abhängigkeit von der augenblicklichen Mischluftklappen-Stellung zwischen 0% bei voller Öffnung des direkten Kaltluftzustroms und voller Schließung des Warmluftzustroms einerseits und 100 % bei voller Schließung des Kaltluftzustroms und voller Öffnung des Warmluftzustroms.

Durch den Verzicht auf einen gesonderten Ausblastemperatur-Sensor im Mischraum MR kann dieser und damit der Einbauraum des Klimagerätes, insbesondere in seinem dem Fahrzeuginnenraum zugewandten Teil, klein gehalten werden. Außerdem läßt sich bei getrennter Links-Rechts-Regelung durch eine entsprechende Links-Rechts-Trennung des Mischraums in zwei Mischraumteile mit getrennt zugeordneten Mischluftklappen der meßtechnische Aufwand wesentlich reduzieren, da anstelle der ansonsten getrennten Ausblastemperatur-Sensoren in jedem Mischraumteil nur jeweils ein einziger Temperatur-Sensor für den Verdampfer bzw. den Wärmetauscher genügt und die unterschiedlichen Temperaturverhältnisse in der rechten bzw. linken Gerätehälfte über die entsprechend unterschiedlichen Mischluftklappen-Stellungen in den Mischraumteilen unter Zugrundelegung der Regelkurven gemäß FIG 2 individuell berücksichtigt werden können.

## Patentansprüche

1. Klimagerät, insbesondere für ein Kraftfahrzeug, mit luftseitiger Ausblastemperaturregelung mittels zumindest einer Mischluftklappe (MKI bzw. MKII), die vor einem Mischraum (MR) angeordnet ist, wobei in den Mischraum entsprechend der Stellung der Mischluftklappe (MKI bzw. MKII) in unterschiedlichem Mischungsverhältnis ein Kaltluftstrom nach Durchströmen des Verdampfers (VD) und/oder ein Warmluftstrom nach Durchströmen des Wärmetauschers (WT) eintritt und wobei ein zweiter Temperatursensor (SII) im Warmluftstrom im oder hinter einem Wärmetauscher (WT) angeordnet ist,
**gekennzeichnet durch**
- einen ersten Temperatursensor (SI), der im Kaltluftstrom im oder hinter einem Verdampfer (VD) angeordnet ist, und
- eine Steuer- bzw. Regelvorrichtung, der als Temperatur-Istwerte die Signale beider Temperatursensoren (SI, SII) zugeführt sind und die aus diesen beiden Signalen unter Berücksichtigung eines vorgebbaren Temperatur-Sollwertes das jeweilige Ausblastemperatursignal ermittelt und das Mischungsverhältnis von Warmluft und Kaltluft durch entsprechendes Verstellen der Mischluftklappe einstellt.

2. Klimagerät nach Anspruch 1 mit einer mischluftklappenstellungsabhängigen Wichtung der Temperatur-Sensoren (SI bzw.SII) im Sinne eines maximalen Einflusses des Temperatur-Sensors (SI) im bzw. unmittelbar hinter dem Verdampfer (VD) bei maximaler Kaltluftzufuhr und eines maximalen Einflusses des Temperatur-Sensors (SII) im bzw. unmittelbar hinter dem Wärmetauscher (WT) bei maximaler Warmluftzufuhr und Mischwichtungen bei entsprechenden Zwischenstellungen der Mischluftklappen (MKI bzw.MKII).

3. Klimagerät nach Anspruch 1 und/oder 2 mit einer Wichtung entsprechend zumindest einer vorgegebenen Regelkurve (R1 bzw.R2 bzw.R3).

4. Klimagerät nach Anspruch 3 mit je nach gewählter Luftverteilung, z.B. Defrost (DEF) bzw. Fußraum (DF) bzw. Mittelebene (DM), unterschiedlichen Regelkurven (R1 bzw.R2 bzw.R3).

5. Klimagerät nach zumindest einem der vorhergehenden Ansprüche mit einem von Temperatur-Sensoren freien Mischraum (MR).

## Claims

1. Air-conditioning device, particularly for a motor vehicle, with atmosphere-side blown-air-temperature regulation by means of at least one air-mixing flap (MKI or MKII) which is arranged upstream of a mixing chamber (MR), a cold-air stream, after flowing through the condenser (VD), and/or or a hot-air stream, after flowing through the heat exchanger (WT), entering into the mixing chamber in a variable mixing ratio depending on the setting of the air-mixing flap (MKI or MKII), and a second temperature sensor (SII) in the hot-air stream being arranged in the or downstream of a heat exchanger (WT), characterised by a first temperature sensor (SI), which is arranged in the cold-air stream in the or downstream of a condenser (VD), and a control or regulation unit to which the signals from the two temperature sensors (SI, SII) are led as actual temperatures and which, taking into account a temperature-demand value which can be preset, determines from these two signals the appropriate blown-air temperature signal and sets the hot-air and cold-air mixing ratio via a corresponding adjustment of the mixing flap.

2. Air-conditioning device according to Claim 1 with weighting of the temperature sensors (SI or SII) depending on the setting of the air-mixing flap, in the sense of a maximum influence of the temperature sensor (SI) in or immediately downstream of the condenser (VD) in the case of maximum cold-air feed and a maximum influence of the temperature sensor (SII) in or immediately downstream of the heat exchanger (WT) in the case of a maximum hot-air feed and mix-weightings in the case of corresponding intermediate settings of the air-mixing flaps (MKI or MKII).

3. Air-conditioning device according to Claim 1 and/or 2 with weighting according to at least one preset regulation curve (R1 or R2 or R3).

4. Air-conditioning device according to Claim 3 with various regulation curves (R1 or R2 or R3) depending on the selected air distribution, e.g. defrost (DEF) or foot well (DF) or central area (DM).

5. Air-conditioning device according to at least one of the preceding claims, with a mixing chamber (MR) free of temperature sensors.

## Revendications

1. Appareil de climatisation, en particulier pour un véhicule automobile, avec régulation de la température de soufflage, côté air, au moyen d'au moins un volet de mixage d'air (MKI ou MKII) qui est monté en amont d'une chambre de mixage (MR), dans lequel un flux d'air froid après être passé par l'évaporateur (VD) et/ou un flux d'air chaud après être passé par l'échangeur de chaleur (WT) entre dans la chambre de mixage selon un rapport de mélange variable en fonction de la position du volet de mixage d'air (MKI ou MKII), et un deuxième capteur de température (SII) est monté dans le flux d'air chaud dans ou en aval d'un échangeur de chaleur (WT),
caractérisé par
- un premier capteur de température (SI), monté dans le flux d'air froid dans ou en aval d'un évaporateur (VD) et par
- un dispositif de commande ou de régulation, auquel sont transmis, les signaux des deux capteurs de température (SI, SII) en tant que valeurs réelles de température et qui, à partir de ces deux signaux, compte-tenu d'une valeur de consigne de température pouvant être prédéfinie calcule le signal de température de soufflage correspondant et règle le rapport de mélange d'air chaud et d'air froid en positionnant en conséquence le volet de mixage d'air.

2. Appareil de climatisation selon la revendication 1, comprenant une pondération des capteurs de température (SI ou SII), en fonction de la position des volets de mixage d'air, au sens d'une influence maximale du capteur de température (SI) dans ou immédiatement en aval de l'évaporateur (VD) avec une arrivée maximale d'air froid et d'une influence maximale du capteur de température (SII) dans ou immédiatement en aval de l'échangeur de chaleur (WT) avec une arrivée maximale d'air chaud et des pondérations de mélange pour des positions intermédiaires correspondantes des volets de mixage d'air (MKI ou MKII).

3. Appareil de climatisation selon la revendication 1 et/ou la revendication 2, comprenant une pondération correspondant au moins à une courbe de régulation donnée (R1 ou R2 ou R3).

4. Appareil de climatisation selon la revendication 3, comprenant différentes courbes de régulation (R1 ou R2 ou R3) en fonction de la répartition d'air choisie, par exemple dégivrage (DEF) ou espace des pieds (DF) ou mi-hauteur (DM).

5. Appareil de climatisation selon au moins l'une des revendications précédentes, comportant une chambre de mixage dépourvue de capteur de température.
